# EUROPÄISCHE PATENTSCHRIFT

(11) **EP 1 249 356 B1**
(45) Veröffentlichungstag und Bekanntmachung des Hinweises auf die Patenterteilung: **29.09.2004**
(21) Anmeldenummer: 02007986.9
(22) Anmeldetag: 10.04.2002
(51) Int. Cl.: B60G 9/00, B60G 21/05

(54) **Achseinbindung für gefederte Fahrzeugachsen**
Axle fixation for a sprung vehicle axle
Fixation d'essieu pour un essieu suspendu de véhicule

(30) Priorität: 14.04.2001 DE 10118696
(43) Veröffentlichungstag der Anmeldung: 16.10.2002
(73) Patentinhaber: BPW Bergische Achsen Kommanditgesellschaft, 51674 Wiehl (DE)
(72) Erfinder: Michels, Burchard, 53804 Much (DE); Kopplow, Hans-Werner, 51588 Nümbrecht (DE)
(74) Vertreter: Christophersen, Ruth

(56) Entgegenhaltungen:
- EP-A- 0 590 528
- EP-A- 0 618 095
- EP-A- 0 810 109
- US-A- 2 170 177
- US-A- 3 386 724
- US-A- 3 773 347

## Beschreibung

Die Erfindung betrifft eine Achseinbindung für gefederte Fahrzeugachsen mit einem vorzugsweise als Vierkantrohr ausgebildeten Achsrohr, das Achsrohr an seiner Ober- oder Unterseite kreuzenden Längslenkern oder Blattfedern sowie quer sowohl zu den Längslenkern bzw. Blattfedern wie auch zu dem Achsrohr verlaufenden und diese Teile unter Zwischenlage einer Achsplatte gegeneinander ziehenden Zugstangen.

Eine Achseinbindung mit diesen Merkmalen ist z. B. aus der EP 0 590 528 A1 bekannt. Als Achskörper dient hierbei ein Vierkantrohr mit abgerundeten Kanten, an denen entsprechende Übergangsradien ausgebildet sind. Mit diesen Übergangsradien liegt der Achskörper an entsprechend konkav geformten Druckflächen der Achsplatte an. Ferner vorgesehen ist z. B. eine bügelförmige Zugstange, welche um den Achskörper herumgeführt sein kann, und an ihren Gewindeenden mit Verschraubungen versehen ist. Auf diese Weise werden Achskörper und Längslenker unter Einklemmung der dazwischen angeordneten Achsplatte gegeneinander gespannt, wobei sich der einen unrunden Querschnitt aufweisende Achskörper unter einem gewissen Formschluß gegen die entsprechend gestaltete Kontur der Achsplatte abstützt. In der Praxis kann es bei Übertragung hoher Momente zwischen dem Achsrohr und dem Längslenker zu Relativbewegungen zwischen diesen Teilen kommen, insbesondere bei mit der Zeit nachlassender Vorspannung.

Der Erfindung liegt die Aufgabe zugrunde, eine Achseinbindung für gefederte Fahrzeugachsen zu schaffen, die auch im Falle einer verringerten Vorspannung zur Übertragung hoher Momente zwischen Achsrohr und Längslenker geeignet ist.

Zur Lösung wird bei einer Achseinbindung der eingangs genannten Art vorgeschlagen, daß die Achsplatte im Bereich der Anlage des Achsrohrs mit einer zahnartigen Struktur bestehend aus zu dem Achsrohr hin gerichteten Vorsprüngen versehen ist.

Bei der erfindungsgemäßen Achseinbindung führt das Anziehen der Zugstangen dazu, daß die vorzugsweise kantig gestalteten Vorsprünge geringfügig in das Material des Achsrohrs eindringen, wodurch ein zusätzlicher Formschluß zwischen Achsplatte und Achsrohr erreicht wird. In Folge dieses zusätzlichen Formschlusses ist die erfindungsgemäße Achseinbindung zur Übertragung besonders hoher Momente zwischen Achsrohr und Längslenker geeignet. Selbst für den Fall, daß durch das Setzverhalten der geklemmten Bauteile eine Verringerung der Vorspannung eintritt, läßt sich immer noch ein ausreichend hohes Moment zwischen Achsrohr und Längslenker übertragen.

Gemäß einer bevorzugten Ausführungsform erstrecken sich die einzelnen Vorsprünge langgestreckt parallel zueinander wie auch parallel zu dem Achsrohr. Auf diese Weise wird der zusätzliche Formschluß in Folge der in das Material des Achsrohrs eindringenden Vorsprünge ausschließlich dazu ausgenutzt, höhere Drehmomente zwischen Achsrohr und Achsplatte und damit letztendlich auch zwischen Achsrohr und Längslenker zu übertragen. Solche hohen Drehmomente können insbesondere beim starken Abbremsen des Fahrzeuges auftreten, jedoch auch bei einem Überfahren einen starken Schlag auslösender Fahrbahnhindernisse.

Gemäß einer bevorzugten Ausgestaltung befinden sich die Vorsprünge in jenem Bereich der Achsplatte, an dem sich das als Vierkantrohr ausgebildete Achsrohr mit seinen Übergangsradien abstützt. Auf diese Weise befinden sich die Vorsprünge dort, wo das Achsrohr ohnehin besonders steif ausgebildet ist, und damit den Vorsprüngen einen entsprechend hohen Widerstand entgegensetzen kann.

Der Formschluß zwischen den zum Achsrohr hin gerichteten Vorsprüngen und dem Material des Achsrohrs läßt sich noch verbessern, wenn die Achsplatte zwischen jenen Bereichen, an denen sich das Achsrohr mit seinen Übergangsradien abstützt, mit mindestens einer flachen Einsenkung versehen ist. In diesem Fall nimmt die Einsenkung an der Übertragung der von den Zugstangen erzeugten Druckkräfte nicht oder nur zu einem geringen Anteil teil, so daß die Druckkräfte nahezu vollständig im Bereich der Vorsprünge wirken, und sich diese mit besonderer Effizienz im Material des Achsrohres verbeißen können.

Der zwischen den beteiligten Teilen erzeugte Druck läßt sich ferner dann vorteilhaft auf den unmittelbaren Bereich der Vorsprünge lenken, wenn sich die Vorsprünge mit Rücksprüngen abwechseln, und die Achsplatte im Bereich der Anlage des Achsrohrs mit zusätzlichen Stützflächen versehen ist, deren Kontur der entsprechenden Außenkontur des Achsrohrs folgt, wobei der Abstand der Stützflächen zu der Außenkontur des Achsrohrs geringer ist, als der Abstand zwischen den Rücksprüngen und der Außenkontur.

Zur Vermeidung zusätzlicher Arbeitsgänge bei der Herstellung der Achsplatte wird schließlich vorgeschlagen, daß die Achsplatte ein Schmiedeteil ist, an dem auch die Vorsprünge Ergebnis des Schmiedeprozesses sind.

Weitere Einzelheiten und Vorteile ergeben sich aus der nachfolgenden Beschreibung der zugehörigen Zeichnungen, in denen Ausführungsformen einer erfindungsgemäß ausgebildeten Achseinbindung dargestellt sind. Auf der Zeichnung zeigen:
- Fig. 1: eine Prinzipdarstellung einer Luftfederachse mit einer Achseinbindung in teilweise geschnittener Seitenansicht;
- Fig. 2: in einer vergrößerten Einzeldarstellung die Achsplatte der Achseinbindung nach Fig. 1;
- Fig. 3: die Achsplatte in perspektivischer Darstellung;
- Fig. 4: eine vergrößerte Darstellung der in Fig. 2 eingezeichneten Einzelheit IV;
- Fig. 5: die Achsplatte der Achseinbindung in einer zweiten Ausführungsform;
- Fig. 6: die Achsplatte nach Fig. 5 in perspektivischer Darstellung und
- Fig. 7: in vergrößerter Darstellung die in Fig. 5 eingezeichnete Einzelheit VII.

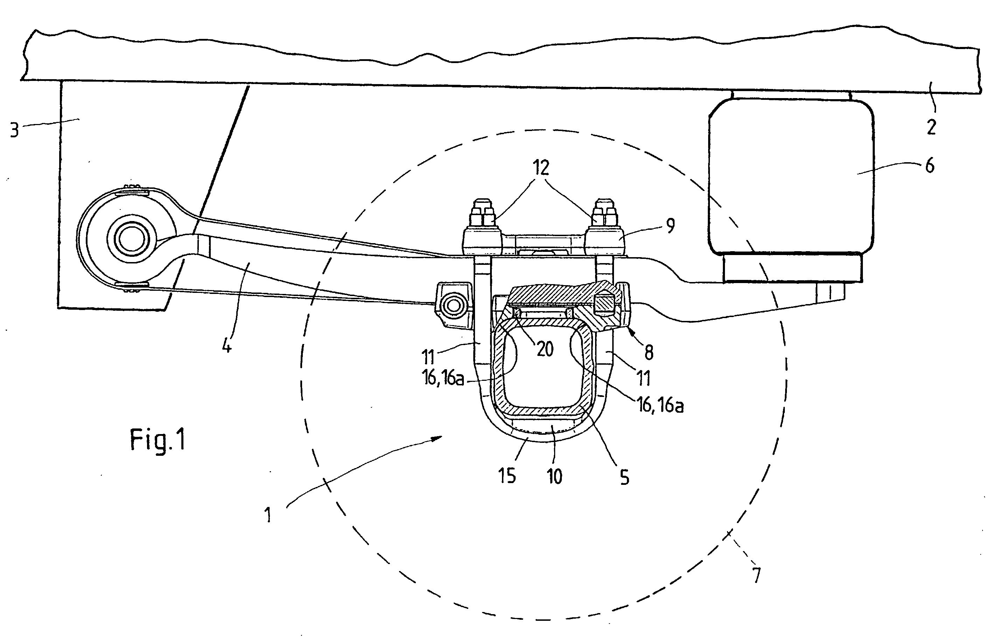

Bei der in Fig. 1 zur Übersicht dargestellten Luftfederachse 1 für ein gezogenes Fahrzeug und insbesondere für einen LKW-Anhänger sind unter einem Fahrzeugrahmen 2 Stützen 3 befestigt, an denen als Federn ausgebildete Längslenker 4 oder Blattfedern für ein Achsrohr 5 schwenkbar gelagert sind. Zwischen dem Fahrzeugrahmen 2 und dem rückwärtigen Ende des Längslenkers 4 sind Luftfederbälge 6 angeordnet. Das einen im wesentlichen quadratischen Querschnitt mit Übergangsradien aufweisende Achsrohr 5, an dem die Räder 7 des Fahrzeuges gelagert sind, ist unter einem vorderen, höher liegenden Längsabschnitt des Längslenkers 4 angeordnet, während sich die Luftfederbälge 6 auf tiefer liegenden hinteren Längsabschnitten der Längslenker 4 abstützen. Zwischen den Stützen 3 und dem Achsrohr 5 kann auf jeder Seite außerdem ein Stoßdämpfer angeordnet sein.

Jede Achseinbindung für das Achsrohr 5 besteht aus einer Achsplatte 8, einer Federplatte 9, einem Achslappen 10, Zugstangen 11 in Gestalt von U-Bügeln und Sicherungsmuttern 12. Die Achsplatte 8 ist an ihrer Unterseite U-förmig profiliert und liegt an den Übergangsradien des Achsrohrs 5 mit speziell geformten, strukturierten Druckflächen an.

Die paarweise verwendeten Zugstangen 11 sind als U-Bügel gestaltet, und ihre gebogenen Bügelenden 15 sind um den Achslappen 10 herumgeführt. Durch Anziehen der Sicherungsmuttern 12 wird in den Zugstangen 11 eine Zugspannung erzeugt, wodurch die Achsplatte 8 zwischen Längslenker 4 und Achsrohr 5 eingeklemmt wird. Hierbei entstehen hohe Druckkräfte zwischen den einander zugewandten Anlageflächen, wodurch bereits ein gewisser Formschluß zwischen Achsrohr 5 und der Unterseite der Achsplatte 8 erzielt wird. Erfindungsgemäß sind ferner Maßnahmen vorgesehen, um diesen Formschluß noch zu verbessern.

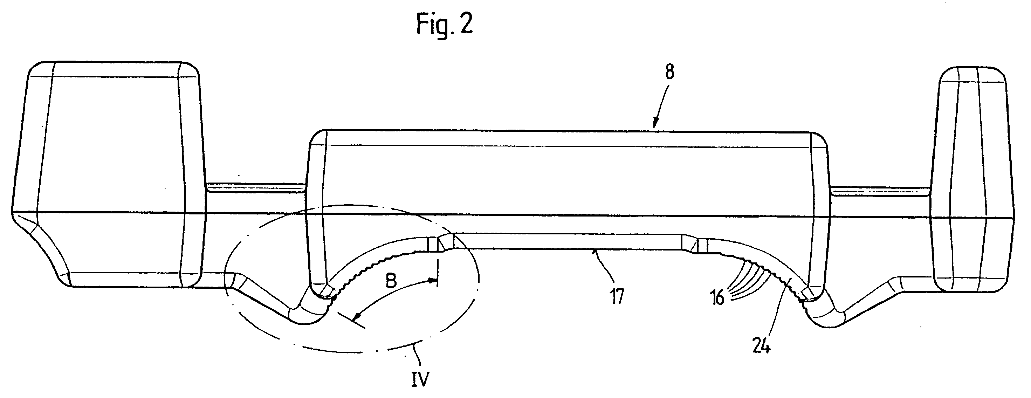

Hierzu ist, wie Fig. 2 erkennen läßt, die Achsplatte 8 im Bereich der Anlage des in Fig. 2 nicht dargestellten Achsrohrs mit einer zahnartigen Struktur versehen, die sich aus einzelnen, zu dem Achsrohr hin gerichteten Vorsprüngen 16 zusammensetzt. Die einzelnen Vorsprünge 16 sind scharfkantig und weisen die Gestalt langgestreckter Grate auf, die sich parallel zueinander wie auch parallel zu dem Achsrohr erstrecken. Fig. 2 läßt insbesondere erkennen, daß sich die Vorsprünge 16 ausschließlich in jenem konkaven Bereich B der Achsplatte 8 befinden, an dem sich nach erfolgter Montage des Vierkant-Achsrohres dessen Übergangsradien abstützen.

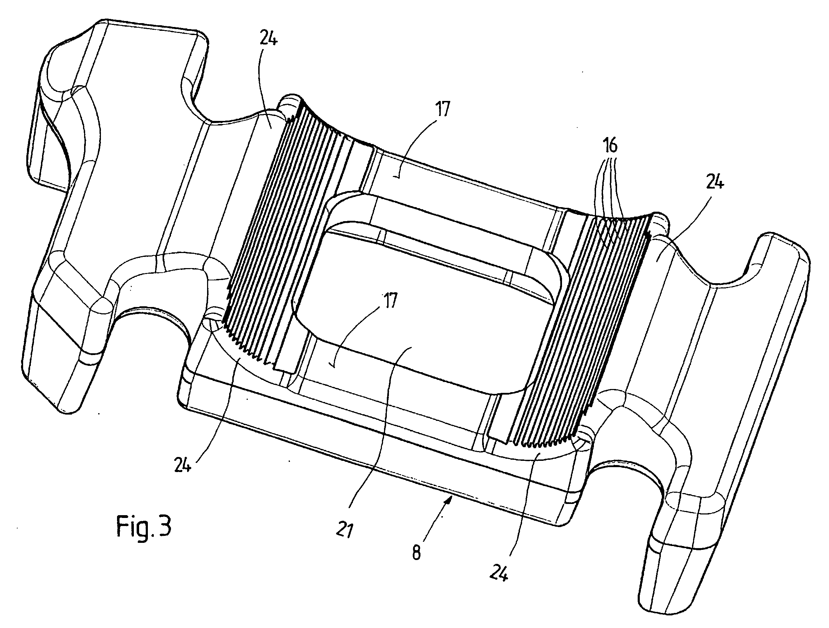

Gemäß Fig. 3 ist die Achsplatte 8 zwischen jenen konkaven Bereichen B, an denen sich das Achsrohr mit seinen Übergangsradien abstützt, mit einer flachen Einsenkung 17 versehen. Die Einsenkung 17 erstreckt sich nach erfolgter Montage des Achsrohrs parallel und mit geringem Abstand zu dessen flacher Oberseite.

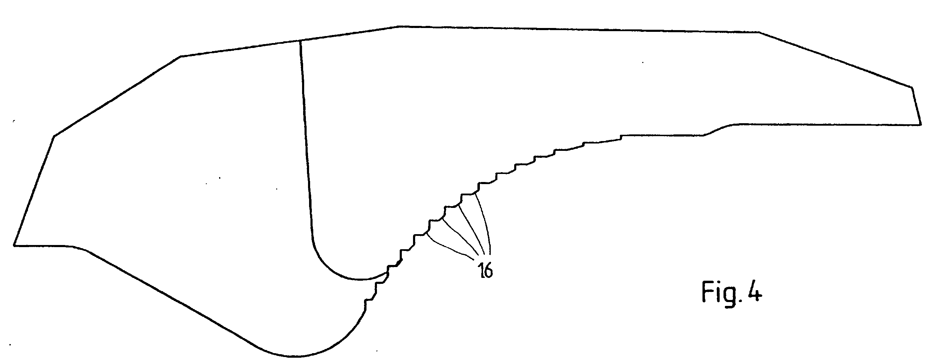

Fig. 4 zeigt in einer gegenüber den Fig. 2 und 3 deutlich vergrößerten Darstellung die Kontur der Vorsprünge. Diese sind aufgrund ihrer kantigen Gestalt geeignet, sich bei einem Anziehen der Achseinbindung durch entsprechendes Anziehen der Zugstange 11 in die Oberfläche des Achsrohres einzugraben, womit zwischen Achsplatte 8 und Achsrohr 5 ein zusätzlicher Formschluß entsteht.

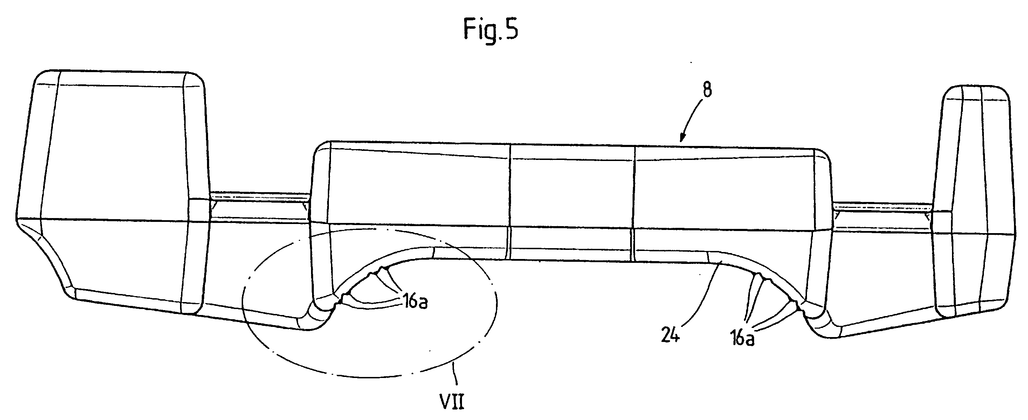

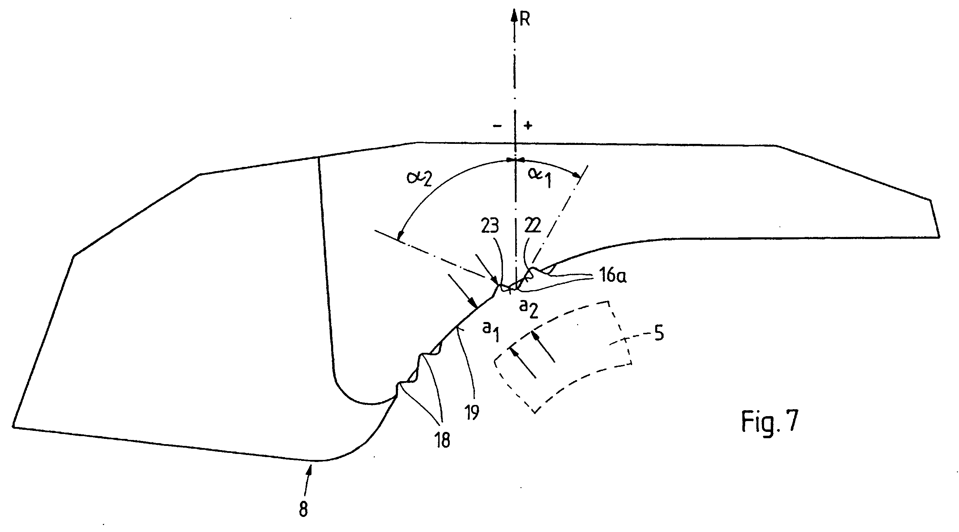

In den Fig. 5, 6 und 7 ist eine zweite Ausführungsform dargestellt, bei der die Anzahl der zahnartig gestalteten Vorsprünge 16a geringer ist, als bei der Ausführungsform nach den Fig. 2, 3 und 4. Insbesondere Fig. 7 läßt erkennen, daß zwei Gruppen von jeweils zwei zahnartig gestalteten Vorsprüngen 16a vorhanden sind. Die Vorsprünge 16a wechseln sich jeweils mit Rücksprüngen 18 ab, die also in das Material der Achsplatte 8 nach Art von Rillen zurückspringen. Die Achsplatte 8 ist ferner im Bereich der Anlage des in Fig. 7 gestrichelt angedeuteten Achsrohrs 5 mit zusätzlichen Stützflächen 19 versehen, deren Kontur der entsprechenden Außenkontur des Achsrohrs 5 folgt. Der Abstand a₁ der Stützflächen 19 zu der Außenkontur des Achsrohrs 5 ist geringer, als der Abstand a₂ zwischen den Rücksprüngen 18 und der Außenkontur des Achsrohrs 5.

Aufgrund dieser Gestaltung ist bei einem Anziehen der Zugstange der Achseinbindung das Eindringen der zahnartigen Vorsprünge 16a in das Material des Achsrohrs 5 spätestens dann beendet, wenn die Außenkontur des Achsrohrs unmittelbar an die Stützfläche 19 anstößt. Anschließend kann es zu keinen Setzungsprozessen zwischen den so beteiligten Teilen mehr kommen, so daß die Vorspannung der Achseinbindung auch auf Dauer erhalten bleibt.

Von Vorteil ist bei einem zahnförmig gestalteten Vorsprung 16, 16a, daß der Flankenwinkel α₁ der zur Achsmitte hin zeigenden, inneren Flanke 22 zur Klemmrichtung R positiv und der Flankenwinkel α₂ der von der Achsmitte her wegzeigenden, äußeren Flanke 23 negativ ist. Dadurch wird eine vollflächige Anlage der Flanken im eingegrabenen Bereich ohne einen Hinterschnitt bzw. Hohlraum zum Achsrohr 5 erzielt. Diese Gestaltung der Vorsprünge 16, 16a läßt sich hervorragend bei einer durch einen Schmiedeprozess hergestellten Achsplatte 8 erzielen, bei der ohnehin fertigungstechnisch kein Hinterschnitt entstehen kann.

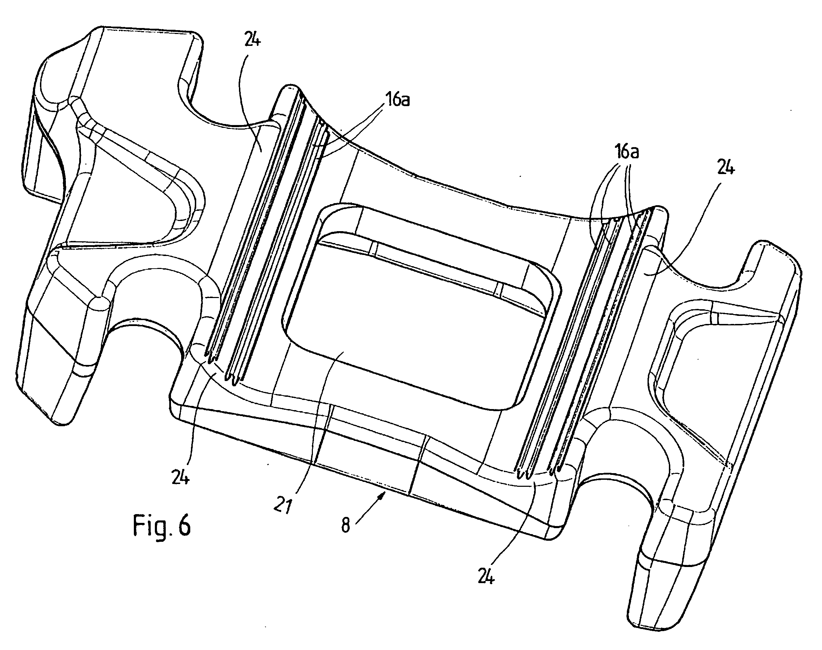

Wie in den perspektivischen Darstellungen Fign. 3 und 6 erkennbar ist, hat der die Anlageflächen der Achsplatte 8 umgebende Rand 24 durch groß gewählte Eckenradien eine weiche Gestalt. Durch das Auslaufen der Endbereiche der Vorsprünge 16, 16a in diese Radien werden scharfe Außenkanten bzw. -spitzen vermieden. Somit wird die Kerbwirkung der entstehenden Rillen im Material des Achsrohres 5 verringert.

Die Übersichtsdarstellung Fig. 1 läßt noch erkennen, daß zur Verbesserung des Formschlusses auf der Oberseite des Achsrohrs 5 Zentrierringe 20 befestigt sein können. Die Zentrierringe 20 sind mit der Oberseite des Achsrohrs 5 verschweißt, und greifen in entsprechend geformte Ausnehmungen 21 der Achsplatten 8 ein.

### Bezugszeichenliste

- 1: Luftfederachse
- 2: Fahrzeugrahmen
- 3: Stütze
- 4: Längslenker
- 5: Achsrohr
- 6: Luftfederbalg
- 7: Rad
- 8: Achsplatte
- 9: Federplatte
- 10: Achslappen
- 11: Zugstange
- 12: Sicherungsmutter
- 15: Bügelende
- 16: Vorsprung
- 16a: Vorsprung
- 17: Einsenkung
- 18: Rücksprung
- 19: Stützfläche
- 20: Zentrierring
- 21: Ausnehmung
- 22: Flanke
- 23: Flanke
- 24: Rand
- B: Bereich
- R: Klemmrichtung
- a₁: Abstand
- a₂: Abstand
- α₁: Flankenwinkel
- α₂: Flankenwinkel

## Patentansprüche

1. Achseinbindung für gefederte Fahrzeugachsen mit einem vorzugsweise als Vierkantrohr ausgebildeten Achsrohr (5), das Achsrohr (5) an seiner Oberoder Unterseite kreuzenden Längslenkern (4) oder Blattfedern sowie quer sowohl zu den Längslenkern (4) bzw. Blattfedern, wie auch zu dem Achsrohr (5) verlaufenden und diese Teile unter Zwischenlage einer Achsplatte (8) gegeneinander ziehenden Zugstangen (11),
**dadurch gekennzeichnet,**
**daß** die Achsplatte (8) im Bereich der Anlage des Achsrohrs (5) mit einer zahnartigen Struktur bestehend aus zu dem Achsrohr hin gerichteten Vorsprüngen (16, 16a) versehen ist.

2. Achseinbindung nach Anspruch 1, **dadurch gekennzeichnet, daß** sich die einzelnen Vorsprünge (16, 16a) langgestreckt parallel zueinander wie auch parallel zu dem Achsrohr (5) erstrecken.

3. Achseinbindung nach Anspruch 1 oder Anspruch 2, **dadurch gekennzeichnet, daß** sich die Vorsprünge (16, 16a) in jenem Bereich (B) der Achsplatte (8) befinden, an dem sich das als Vierkantrohr ausgebildete Achsrohr (5) mit seinen Übergangsradien abstützt.

4. Achseinbindung nach Anspruch 3, **dadurch gekennzeichnet, daß** die Achsplatte (8) zwischen jenen Bereichen (B) an denen sich das Achsrohr (5) mit seinen Übergangsradien abstützt, mit mindestens einer flachen Einsenkung (17) versehen ist.

5. Achseinbindung nach einem der Ansprüche 1 bis 4, **dadurch gekennzeichnet, daß** sich die Vorsprünge (16a) mit Rücksprüngen (18) abwechseln, und daß die Achsplatte (8) im Bereich der Anlage des Achsrohrs (5) mit zusätzlichen Stützflächen (19) versehen ist, deren Kontur der entsprechenden Außenkontur des Achsrohrs (5) folgt, wobei der Abstand (a₁) der Stützflächen (19) zu der Außenkontur des Achsrohrs (5) geringer ist, als der Abstand (a₂) zwischen den Rücksprüngen (18) und der Außenkontur.

6. Achseinbindung nach einem vorangehenden Ansprüche, **dadurch gekennzeichnet, daß** die Achsplatte (8) ein Schmiedeteil ist, an dem auch die Vorsprünge (16, 16a) Ergebnis des Schmiedeprozesses sind.

7. Achseinbindung nach einem der vorangehenden Ansprüche, **dadurch gekennzeichnet, daß** Vorsprünge (16, 16a) zahnförmig gestaltet sind, wobei die Flankenwinkel (α₁) der zur Achsmitte hin zeigenden, inneren Flanken (22) der Zähne zur Klemmrichtung (R) positiv, und die Flankenwinkel (α₂) der von der Achsmitte wegweisenden, äußeren Flanken (23) negativ sind.

8. Achseinbindung nach einem der vorhergehenden Ansprüche, **dadurch gekennzeichnet, daß** der die Anlageflächen der Achsplatte (8) an dem Achsrohr (5) umgebende Rand (24) einen großen Eckenradius aufweist, und daß die Vorsprünge (16, 16a) mit ihren Enden in diesen Eckenradius auslaufen.

## Claims

1. Axle fixing for sprung vehicle axles, comprising an axle tube (5) that is preferably designed as a rectangular tube, trailing arms (4) or leaf springs that cross the axle tube (5) at its upper or lower side, and tie rods (11) that run transversely with respect to both the trailing arms (4) or leaf springs and the axle tube (5) and pull said parts towards one another with the interposition of an axle plate (8), **characterized in that** the axle plate (8) is provided, in the region where the axle tube (5) bears, with a toothed structure consisting of protrusions (16, 16a) that are directed towards the axle tube.

2. Axle fixing according to Claim 1, **characterized in that** the individual protrusions (16, 16a) extend longitudinally parallel to one another and parallel to the axle tube (5).

3. Axle fixing according to Claim 1 or Claim 2, **characterized in that** the protrusions (16, 16a) are located **in that** region (B) of the axle plate (8) at which the axle tube (5), which is designed as a rectangular tube, bears with its transition radii.

4. Axle fixing according to Claim 3, **characterized in that** the axle plate (8) is provided, between those regions (B) at which the axle tube (5) bears with its transition radii, with at least one flat hollow (17).

5. Axle fixing according to any of Claims 1 to 4, **characterized in that** the protrusions (16a) alternate with recesses (18) and **in that** the axle plate (8) is provided, in the region where the axle tube (5) bears, with additional bearing surfaces (19) the contour of which matches the corresponding outer contour of the axle tube (5), the distance (a₁) of the bearing surfaces (19) from the outer contour of the axle tube (5) being smaller than the distance (a₂) between the recesses (18) and the outer contour.

6. Axle fixing according to any of the preceding claims, **characterized in that** the axle plate (8) is a forged part on which the protrusions (16, 16a) are also a result of the forging process.

7. Axle fixing according to any of the preceding claims, **characterized in that** protrusions (16, 16a) are designed in a toothed manner, the flank angles (α₁) of the inner flanks (22) of the teeth, said flanks pointing towards the centre of the axle, being positive with respect to the fixing direction (R) and the flank angles (α₂) of the outer flanks (23) which point away from the centre of the axle being negative.

8. Axle fixing according to any of the preceding claims, **characterized in that** the edge (24) surrounding the bearing surfaces of the axle plate (8) on the axle tube (5) has a large corner radius, and **in that** the protrusions (16, 16a) taper off at their ends into this corner radius.

## Revendications

1. Fixation d'essieu pour un essieu suspendu de véhicule comprenant une trompette (5) réalisée de préférence sous forme de tube carré, des bras oscillants longitudinaux (4) ou des ressorts à lame croisant la trompette (5) sur son côté supérieur ou inférieur ainsi que des barres de traction (11) s'étendant transversalement aussi bien aux bras oscillants longitudinaux (4) ou aux ressorts à lame qu'à la trompette (5) et tirant ces pièces les unes contre les autres lors de l'insertion d'une plaque de came (8),
**caractérisée en ce que**
la plaque de came (8) est dotée dans la zone de l'appui de la trompette (5) d'une structure dentée constituée de saillies (16, 16a) orientées vers la trompette.

2. Fixation d'essieu selon la revendication 1, **caractérisée en ce que** les saillies (16, 16a) individuelles s'étendent longitudinalement parallèlement l'une à l'autre ainsi que parallèlement à la trompette (5).

3. Fixation d'essieu selon la revendication 1 ou 2, **caractérisée en ce que** les saillies (16, 16a) se situent dans la zone (B) de la plaque de came (8) sur laquelle la trompette (5) réalisée sous forme de tube carré s'appuie avec ses rayons de transition.

4. Fixation d'essieu selon la revendication 3, **caractérisée en ce que** la plaque de came (8) est dotée, entre les zones (B) sur lesquelles s'appuie la trompette (5) avec ses rayons de transition, d'au moins un creux (17) plat.

5. Fixation d'essieu selon l'une des revendications 1 à 4, **caractérisée en ce que** les saillies (16a) sont disposées en alternance avec des repoussés (18), et **en ce que** la plaque de came (8) est dotée dans la zone de l'appui de la trompette (5) de surfaces d'appui (19) supplémentaires, dont le contour suit le contour externe correspondant à la trompette (5), la distance (a,) entre les surfaces d'appui (19) et le contour externe de la trompette (5) étant inférieure à la distance (a₂) entre les repoussés (18) et le contour externe.

6. Fixation d'essieu selon l'une quelconque des revendications précédentes, **caractérisée en ce que** la plaque de came (8) est une pièce forgée, sur laquelle les saillies (16, 16a) proviennent elles aussi du processus de forgeage.

7. Fixation d'essieu selon l'une quelconque des revendications précédentes, **caractérisée en ce que** les saillies (16, 16a) sont réalisées de façon dentiforme, les angles du filet (α₁) des filets intérieurs (22) des dents orientés vers le centre de l'essieu par rapport à la direction de serrage (R) étant positifs, et les angles du filet (α₂) des filets (23) extérieurs s'écartant du centre de l'essieu étant négatifs.

8. Fixation d'essieu selon l'une quelconque des revendications précédentes, **caractérisée en ce que** le bord (24) entourant les surfaces d'appui de la plaque de came (8) sur la trompette (5) présente un rayon de pointe important, et **en ce que** les saillies (16, 16a) finissent avec leurs extrémités dans ce rayon de pointe.
